# EUROPEAN PATENT SPECIFICATION

(11) **EP 2 935 502 B1**
(45) Date of publication and mention of the grant of the patent: **18.09.2019**
(21) Application number: 13777206.7
(22) Date of filing: 02.10.2013
(51) Int. Cl.: C09J 123/14, C09J 157/02

(54) **ADHESIVE COMPOSITION**
KLEBSTOFFZUSAMMENSETZUNG
COMPOSITION ADHÉSIVE

(30) Priority: 21.12.2012 US 201213723963; 14.03.2013 EP 13159126
(43) Date of publication of application: 28.10.2015
(73) Proprietor: ExxonMobil Chemical Patents Inc., Baytown TX 77520-2101 (US)
(72) Inventor: SCHROEYERS, Jurgen, B-3530 Helchteren (BE); CURRY, Christopher, Lewis, Dayton, TX 77535 (US)
(74) Representative: ExxonMobil Chemical Europe Inc.
(86) International application number: PCT/US2013/063001
(87) International publication number: WO 2014/099098

(56) References cited:
- WO-A1-2011/053406

## Description

### CROSS REFERENCE TO RELATED APPLICATIONS

### FIELD OF THE INVENTION

The instant disclosure is related to hot melt pressure-sensitive adhesive compositions and their applications. In particular, the adhesive compositions described herein comprise a propylene-based polymer component.

### BACKGROUND

Pressure-sensitive adhesives are well known, and are used in a wide variety of applications, the largest among them being label and tape. Such adhesives may be applied to, for example, paper, plastic films, metal, etc., to form the aforementioned labels or tapes. These labels and tapes may be affixed to a wide variety of substrates, and in many cases are removable or repositionable.

"No-label look" labels, also referred to as "super-transparent" labels, are obtaining popularity and are of significant commercial interest. Adhesives for no-label look labels require a high level of transparency or clarity, along with other properties typical of such adhesives.

Hot melt pressure-sensitive adhesive systems are known in the art and consist of tackified thermoplastic elastomers such as styrenic block copolymers together with tackifying resin(s) and generally some plasticizing oil, an antioxidant, and optional fillers. Styrenic block copolymers containing polystyrene and polybutadiene blocks and/or polyisoprene blocks are particularly useful. These materials are generally available as pure triblocks, sometimes referred to as SIS and SBS copolymers, and diblocks, sometimes referred to as SI and SB copolymers or SIB copolymers. The materials are also available as mixtures of diblock and triblock materials, sometimes referred to as SIS+SI or SIS+SB. Styrenic block copolymers could also have a radial structure generally identified as (SI)n or (SB)n where n for most commercial available polymers equals, but is not limited to 4. In (for label) a preferred case, those radial block copolymers are blended with other styrenic block copolymers like diblock and triblock structures. WO 2011/053406 A1 describes pressure-sensitive hot melt adhesive compositions comprising a block copolymer component, a hydrocarbon tackifier resin component, and a propylene-based polymer component.

Adhesive properties and viscosity can be controlled by varying the diblock-to-triblock ratio, varying the styrene content, varying the polymer molecular weight, and/or varying the block molecular weights within the polymers. The melt viscosity can also be controlled by the addition of tackifier resins and/or plasticizers like oils.

One drawback of such adhesive formulations is that, in order to achieve the desired processability and removability of a product, many additives such as silicone oils, waxes, and other fillers must be added. Incorporation of such additives leads to increased expense, and by number of ingredients used also limits the equipment that may be used to manufacture the adhesive compositions.

In addition, hot melt pressure-sensitive adhesive systems suitable for use in a no-label look label must have clarity in combination with other properties. It would be useful, therefore, to develop an adhesive composition for use with labels and/or tapes having the properties of a typical block copolymer-based adhesive at a lower cost and with increased processability, and which may be suitable for use in no-label look labels.

### SUMMARY

The instant disclosure is directed to adhesive compositions which function as hot melt pressure-sensitive adhesive compositions and their commercial applications. The adhesive compositions comprise at least one propylene-based polymer component. The adhesive compositions further comprise 0.1 to 30 wt% of a block copolymer based on the weight of the hot melt pressure-sensitive adhesive composition.

In an embodiment, an adhesive article comprises a substrate and a hot melt pressure-sensitive adhesive composition comprising a propylene-based polymer component %. The adhesive composition further comprises 0.1 to 30 wt% of a block copolymer based on the weight of the hot melt pressure-sensitive adhesive composition.

The compositions described herein in some embodiments combine excellent viscosity and/or shear properties while improving the performance of tapes, labels, and other applications in which the adhesives are employed, and may have clarity suitable for use in no-label look labels. In further embodiments, adhesive articles such as adhesive tapes and labels comprise a substrate and one or more hot melt pressure-sensitive adhesive compositions according to one or more embodiments described herein. Embodiments of the resulting adhesive tapes may demonstrate good removability and/or repositionability, along with exceptional peel strength on one or more of various surfaces.

### DETAILED DESCRIPTION

In an embodiment, a hot melt pressure-sensitive adhesive composition comprising a propylene-based polymer component comprising from 60 to 98 wt% propylene and from 2 to 40 wt% of one or more of ethylene and C₄-C₁₀ alpha-olefins, based on the weight of the propylene-based polymer component, the propylene-based polymer component having a melting point less than or equal to 130°C and a triad tacticity greater than 75%; the composition comprising 0.1 to 30 wt% of a block copolymer based on the weight of the hot melt pressure-sensitive adhesive composition and having a viscosity of less than 20,000 mPa-s at 175°C determined according to ASTM D 3236.

In an embodiment, the propylene-based polymer component may comprise from 75 to 98 wt% propylene and from 2 to 25 wt% of one or more of ethylene and C₄-C₁₀ alpha-olefins, and wherein the propylene-based elastomer component has a melting point less than or equal to 120°C; and/or
the propylene-based polymer component may further have a heat of fusion less than 90 J/g; and/or
the propylene-based polymer component may have a melt flow rate (MFR) of from 1 to 900 g/10 min, as measured according to ASTM D-1238 at 230°C, 2.16 kg; and/or
the composition has a viscosity of less than 20,000 mPa-s at 175°C determined according to ASTM D 3236, and/or
the composition may comprise from 1 to 60 wt% of a hydrocarbon tackifier resin; and/or
when present, the hydrocarbon tackifier resin may have a ring-and-ball softening point of from 50° to 140°C and/or;
the composition may comprise from 1 to 30 wt% of a process oil; and/or
the composition may be a removable adhesive, and comprise less than 0.01 wt% of a silicon oil and/or a silicon wax; and/or
the composition may have a clear visual determination, wherein the visual determination consists of providing a testing square consisting of a piece of white 20 pound weight paper having a brightness of 90%, the testing square having a printed portion comprising the capital letters "O" and "Q" printed with a laser printer to be visually distinguishable at 1 space apart from each other thereon in black text using 10-point Helvetica font;
depositing a sample of the composition at a temperature above the melting point of the composition onto the testing square using a flat applicator to cover the printed portion of the testing square with a film of the composition having a thickness of 1 mm, followed by allowing the composition to cool to a temperature of 25°C to produce a prepared test sample; and
visually determining the clarity of the prepared test sample wherein the prepared test sample has a clear visual determination when an observer having essentially 20:20 vision is able to visually distinguish the letter "O" from the letter "Q" in the printed portion of the testing square at a distance of about 30 cm from the prepared test sample at an illumination of 1000 lux; and/or
the propylene-based polymer component of the composition may have a solubility in toluene of less than 10 wt% at 25°C; and/or any combination thereof.

In an embodiment, an adhesive article comprises a substrate and a hot melt pressure-sensitive adhesive composition comprising a propylene-based polymer component comprising from 60 to 98 wt% propylene and from 2 to 40 wt% ethylene and/or C4-C10 alpha-olefins, the propylene-based elastomer component having a melting point less than or equal to 130°C and a triad tacticity greater than 75%; the adhesive composition from 0.1 to 30 wt.% of a block copolymer based on the weight of the hot melt pressure sensitive adhesive composition, and having a viscosity of less than 20,000 mPa-s at 175°C determined according to ASTM D 3236.

In an embodiment, the adhesive article may comprise an adhesive composition comprising from 1 to 60 wt% of a hydrocarbon tackifier resin; and/or
when present the hydrocarbon tackifier resin may have a ring-and-ball softening point of from 50 to 140°C; and/or
the adhesive composition has a clear visual determination as described herein; and/or
the adhesive article may be an adhesive tape having an initial 180° peel strength of the tape on glass of less than or equal to 10 N/25 mm at a coating weight of 20 g/m2; and/or
the adhesive article may be an adhesive tape having an initial 180° peel strength of the tape on polyethylene film of less than or equal to 10 N/25 mm at a coating weight oft 20 g/m2; and/or any combination thereof.

For purposes herein, a pressure sensitive adhesive (PSA) forms a bond by the application of light pressure to marry the adhesive with the adherend. The bond forms because the adhesive is soft enough to flow (i.e."wet") to the adherend. The bond has strength because the adhesive is hard enough to resist flow when stress is applied to the bond. Once the adhesive and the adherend are in close proximity, molecular interactions, such as van der Waals forces, become involved in the bond, contributing significantly to its ultimate strength.

The compositions according to the instant disclosure possess a glass transition temperature (Tg), at which the molecular chain exhibits the greatest free volume or maximum flow character. When a material is heated from its glassy state to either a rubbery or a fluid state; if Tg appears in the vicinity of room temperature and the value of Tangent delta (damping factor, the ratio of loss modulus-G" to storage modulus-G') is greater than one (1); the material cold flows and is considered to be pressure sensitive.

PSAs, according to embodiments disclosed herein, may be either permanent or removable applications. For purposes herein removable adhesives, including PSA and articles comprising PSAs are compositions which form a temporary bond, and ideally can be removed after months or years without leaving residue on the adherend. Removable adhesives are used in applications such as surface protection films, masking tapes, bookmark and note papers, price marking labels, promotional graphics materials, and the like, whereas a permanent PSA refers to a PSA film which may be initially removable (for example to recover mislabeled goods) and, which builds adhesion to a permanent bond after several hours or days.

Examples of permanent applications include safety labels for power equipment, foil tape for HVAC duct work, automotive interior trim assembly, and sound/vibration damping films. Embodiments include so-called high performance permanent PSAs which exhibit high adhesion values and can support kilograms of weight per square centimeter of contact area, even at elevated temperature. Permanent PSAs may be initially removable (for example to recover mislabeled goods) and build adhesion to a permanent bond after several hours or days.

For purposes herein removable adhesives and articles comprising the same refer to compositions which form a temporary bond, and ideally can be removed after months or years without leaving residue on the adherend. Removable adhesives are used in applications such as surface protection films, masking tapes, bookmark and note papers, price marking labels, promotional graphics materials. Some removable adhesives are designed to repeatedly stick and unstick.

In addition to being pressure sensitive adhesives, the instant disclosure is directed to PSA which are also hot melt adhesives, which are generally defined as thermoplastic compositions applied in molten form, which solidify on cooling to form strong bonds between a wide range of materials. Accordingly, in an embodiment, the compositions disclosed herein include hot melt pressure-sensitive adhesives (HMPSA).

### Propylene-Based Polymer Component

In one or more embodiments, the adhesive compositions described herein comprise a propylene-based polymer component, which in turn comprises one or more propylene-based polymers. The propylene-based polymers comprises propylene and from 2 to 40 wt% units derived from ethylene and/or a C4-C10 alpha-olefin. In one or more embodiments, the alpha-olefin comonomer units may derive from ethylene, 1-butene, 1-hexene, 4-methyl-1-pentene, 1-octene, and/or 1-decene. The embodiments described below are discussed with reference to ethylene as the alpha-olefin comonomer, but the embodiments are equally applicable to other propylene copolymers with other alpha-olefin comonomers, or to propylene terpolymers with ethylene and another alpha-olefin comonomer. In this regard, the copolymer may simply be referred to as propylene-based polymers with reference to ethylene as the alpha-olefin.

In one or more embodiments, the propylene-based polymers may include at least about 2 wt%, at least about 3 wt%, at least about 5 wt%, at least about 6 wt%, at least about 8 wt%, or at least about 10 wt% ethylene-derived units. In those or other embodiments, the propylene-based polymers may include up to about 40 wt%, or up to about 30 wt%, or up to about 25 wt%, or up to about 20 wt%, or up to about 18 wt%, or up to about 16 wt%, or up to about 12 wt% ethylene-derived units, where the percentage by weight is based upon the total weight of the propylene-derived and alpha-olefin derived units. Stated another way, the propylene-based polymers may include at least about 60 wt%, or at least about 70 wt%, or at least about 75 wt%, or at least about 80 wt%, or at least about 82 wt% propylene-derived units; and in these or other embodiments, the copolymers may include up to about 98 wt%, or up to about 97 wt%, or up to about 95 wt%, or up to about 94 wt%, or up to about 92 wt%, or up to about 90 wt% propylene-derived units, where the percentage by weight is based upon the total weight of the propylene-derived and alpha-olefin derived units.

The propylene-based polymers of one or more embodiments are characterized by having a single melting temperature as determined by differential scanning calorimetry (DSC). The melting point is defined as the temperature of the greatest heat absorption within the range of melting of the sample. The propylene-based polymer may show secondary melting peaks adjacent to the principal peak, but for purposes herein, these secondary melting peaks are considered together as a single melting point, with the highest of these peaks being considered the melting point (Tm) of the propylene-based polymer.

The Tm of the propylene-based polymer (as determined by DSC) is less than 130°C, or less than 120°C, or less than 110°C, or less than 105°C, or less than 100°C, or less than 95°C, or less than 90°C, or less than 80°C, or less than 70°C.

In one or more embodiments, the propylene-based polymer may be characterized by a heat of fusion (Hf) of at least about 0.5 J/g as determined by DSC. In one or more embodiments, the propylene-based copolymer may be characterized by a heat of fusion that is at least about 0.75 J/g, or at least about 1.0 J/g, or at least about 1.5 J/g, or at least about 3.0 J/g, or at least about 4.0 J/g, or at least about 6.0 J/g, or at least about 7.0 J/g. In these or other embodiments, the propylene-based copolymer may be characterized by a heat of fusion of less than about 90 J/g, or less than about 70 J/g, or less than about 60 J/g, or less than about 50 J/g, or less than about 45 J/g, or less than about 40 J/g, or less than about 30 J/g. The heat of fusion may be reduced by using additional comonomer, operating at higher polymerization temperatures, and/or using a different catalyst that provides reduced levels of steric constraints and favors more propagation errors for propylene insertion.

As used within this specification, DSC procedures for determining Tm and Hf include the following. The polymer is pressed at a temperature of from about 200°C to about 230°C in a heated press, and the resulting polymer sheet is hung, under ambient conditions, in the air to cool. About 6 to 10 mg of the polymer sheet is removed with a punch die. This 6 to 10 mg sample is annealed at room temperature for about 80 to 100 hours. At the end of this period, the sample is placed in a Differential Scanning calorimeter (Perkin Elmer Pyris One Thermal Analysis System) and cooled to about -50°C to about -70°C. The sample is heated at 10°C/min to attain a final temperature of about 200°C. The sample is kept at 200°C for 5 minutes and a second cool-heat cycle is performed. Events from both cycles are recorded. The thermal output is recorded as the area under the melting peak of the sample, which typically occurs between about 0°C and about 200°C; it is measured in Joules and is a measure of the heat of fusion (Hf) of the polymer. The melting point is recorded as the temperature of the greatest heat absorption with respect to a baseline within the range of melting of the sample.

The propylene-based polymer has a triad tacticity of three propylene units, as measured by 13C NMR, of 75% or greater, 80% or greater, 82% or greater, 85% or greater, or 90% or greater. In one or more embodiments, ranges include from 75 to 99%, in other embodiments from 80 to 99%, and in other embodiments from 60 to 97%. Triad tacticity is determined by the methods described in U.S. Patent Application Publication No. 2004/0236042. If the triad tacticity of the copolymer is too high, the level of stereo-irregular disruption of the chain is too low and the material may not be compatible and sufficiently flexible for its purpose in a coating or tie layer. If the triad tacticity is too low, the bonding strength may be too low.

In one or more embodiments, the propylene-based polymer may have a % crystallinity of from about 0.5% to about 40%, or from about 1% to about 30%, or from about 5% to about 25%, determined according to DSC procedures. Crystallinity may be determined by dividing the heat of fusion of a sample by the heat of fusion of a 100% crystalline polymer, which is assumed to be 189 joules/gram for isotactic polypropylene or 350 joules/gram for polyethylene.

In one or more embodiments, the propylene-based polymer may have a density of from about 0.85 g/cm3 to about 0.92 g/cm3, or from about 0.87 g/cm3 to about 0.90 g/cm3, or from about 0.88 g/cm3 to about 0.89 g/cm3 at room temperature as measured per the ASTM D-792 test method.

In one or more embodiments, the propylene-based polymer can have an melt index (MI) (ASTM D-1238, 2.16 kg @ 190°C), of less than or equal to about 10 dg/min, or less than or equal to about 7.5 dg/min, or less than or equal to about 6.5 dg/min, or less than or equal to about 5.5 dg/min, or less than or equal to about 5 dg/min.

In an embodiment, the propylene-based polymer component has a melt flow rate (MFR) of from about 1 to about 900 g/10 min (90 dg/min), as measured according to ASTM D-1238 at 230°C, 2.16 kg.

In one or more embodiments, the propylene-based polymer may have a melt flow rate (MFR), as measured according to the ASTM D-1238, 2.16 kg weight @ 230°C, greater than or equal to about 0.3 dg/min, or at least about 0.5 dg/min, or at least about 0.8 dg/min, or at least about 1.0 dg/min. In these or other embodiments, the melt flow rate may be equal to or less than about 2000 dg/min, or less than about 1000 dg/min, or less than about 900 dg/min, or less than about 700 dg/min, or less than about 500 dg/min, 350 dg/min, or less than about 250 dg/min, or less than about 100 dg/min.

In one or more embodiments, the propylene-based polymer can have a weight average molecular weight (Mw) of from about 5,000 to about 5,000,000 g/mole, or from about 10,000 to about 1,000,000 g/mole, or from about 20,000 to about 500,000 g/mole, or from about 50,000 to about 400,000 g/mole.

In one or more embodiments, the propylene-based polymer can have a number average molecular weight (Mn) of from about 2,500 to about 2,500,000 g/mole, or from about 5,000 to about 500,000 g/mole, or from about 10,000 to about 250,000 g/mole, or from about 25,000 to about 200,000 g/mole.

In one or more embodiments, the propylene-based polymer can have a Z-average molecular weight (Mz) of from about 10,000 to about 7,000,000 g/mole, or from about 50,000 to about 1,000,000 g/mole, or from about 80,000 to about 700,000 g/mole, or from about 100,000 to about 500,000 g/mole.

In one or more embodiments, the molecular weight distribution (MWD=(Mw/Mn)) of the propylene-based polymer may be from about 1 to about 40, or from about 1 to about 15, or from about 1.8 to about 5, or from about 1.8 to about 3.

Techniques for determining the molecular weight (Mn, Mw and Mz) and molecular weight distribution (MWD) may be found in U.S. Patent No. 4,540,753 and in Macromolecules, 1988, Volume 21, p. 3360-3371 (Verstrate et al.). For example, molecular weight may be determined by size exclusion chromatography (SEC) by using a Waters 150 gel permeation chromatograph equipped with the differential refractive index detector and calibrated using polystyrene standards.

### Preparation of the Propylene-Based Polymer

The triad tacticity and tacticity index of the propylene based polymer may be controlled by a catalyst which influences the stereoregularity of propylene placement, the polymerization temperature, according to which stereoregularity can be reduced by increasing the temperature, and by the type and amount of a comonomer which tends to disrupt reduce the level of longer propylene derived sequences.

An excess of comonomer will reduce the crystallinity provided by the crystallization of stereoregular propylene derived sequences to the point where the material lacks strength; too little and the material will be too crystalline. The comonomer content and sequence distribution of the polymers can be measured using 13C nuclear magnetic resonance (NMR) by methods well known to those skilled in the art. Comonomer content of discrete molecular weight ranges can be measured using methods well known to those skilled in the art, including Fourier Transform Infrared Spectroscopy (FTIR) in conjunction with samples by GPC, as described in Wheeler and Willis, Applied Spectroscopy, 1993, Vol. 47, pp. 1128 - 1130. For a propylene ethylene copolymer containing greater than 75 wt% propylene, the comonomer content (ethylene content) of such a polymer can be measured as follows: A thin homogeneous film is pressed at a temperature of about 150°C or greater, and mounted on a Perkin Elmer PE 1760 infrared spectrophotometer. A full spectrum of the sample from 600 cm-1 to 4000 cm-1 is recorded and the monomer weight percent of ethylene can be calculated according to the following equation: Ethylene wt%=82.585-111.987X+30.045X2, where X is the ratio of the peak height at 1155 cm-1 and peak height at either 722 cm-1 or 732 cm-1, whichever is higher. For propylene ethylene copolymers having 75 wt% or less propylene content, the comonomer (ethylene) content can be measured using the procedure described in Wheeler and Willis.

Reference is made to U.S. Patent No. 6,525,157, which describes test methods that are fully applicable for the various measurements referred to in this specification and claims and which contains more details on GPC measurements, the determination of ethylene content by NMR and the DSC measurements.

The catalyst may also control the stereoregularity in combination with the comonomer and the polymerization temperature. The catalyst should, however, be capable of a level of stereoregular placement, generally by suitable chirality of the catalyst.

In one embodiment, the polymer can be prepared using any single sited metallocene catalyst. Such a catalyst may be a transition metal complex generally containing a transition metal Groups 3 to 10 of the Periodic Table and at least one ancillary ligand that remains bonded to the transition metal during polymerization. Preferably the transition metal is used in a reduced cationic state and stabilized by a cocatalyst or activator.

The ancillary ligand may be a structure capable of forming a bond such a cyclopentadienyl type ring structure (See EP129368, EP284708, Rieger EP1070087 and U.S. Patent No. 6,559,262). The ancillary ligand may also be a pyridinyl or amide ligand (See International Patent Application No. WO2003/040201). The transition metal is preferably of Group 4 of the Periodic table such as titanium, hafnium or zirconium, which is used in polymerization in the d0 mono-valent cationic state and has one or two ancillary ligands as described in more detail hereafter. The important features of such catalysts for coordination polymerization are the ligand capable of abstraction and that ligand into which the ethylene (olefinic) group can be inserted.

The manner of activation of the single site catalyst can vary. Alumoxane and preferably methyl alumoxane can be used suitably in an amount to provide a molar aluminum to metallocene ratio of from 1:1 to 20,000:1. Higher molecular weights can be obtained using non- or weakly coordinating anion activators (NCA) derived and generated in any of the ways amply described in published patent art such as EP 277004, EP 426637, EP 426638, and many others. The non-coordinating anion can be a Group 10-14 complex wherein boron or aluminum is the charge-bearing atom shielded by ligands, which may be halogenated, and especially perfluorinated. Preferably tetra-aryl-substituted Group 10-14 non-carbon element-based anion, especially those that are have fluorine groups substituted for hydrogen atoms on the aryl groups, or on alkyl substituents on those aryl groups. The non-coordinating anion may be used in approximately equimolar amounts relative to the transition metal complex, such as at least 0.25, preferably 0.5, and especially 0.8 and such as no more than 4, preferably 2, and especially 1.5. Further options are described in U.S. Patent Nos. 6,048,950; 6,448,358; 6,265,212; 5,198,401; and 5,391,629, and International Patent Application No. WO 1998/27154.

The polymerization reaction is conducted by reacting monomers in the presence of a metallocene catalyst system described herein at a temperature of from 0°C to 200°C for a time of from 1 second to 10 hours. Preferably homogeneous conditions are used, such as a continuous solution process or a bulk polymerization process with excess monomer used as diluent. The continuous process may use some form of agitation to reduce concentration differences in the reactor and maintain steady state polymerization conditions. The heat of the polymerization reaction is preferably removed by cooling of the polymerization feed and allowing the polymerization to heat up to the polymerization, although internal cooling systems may be used.

### Block Copolymer Component

The compositions described herein comprises from 0.1 to 30 wt% of a block copolymer component. In an embodiment, the composition comprises less than or equal to 20 wt%, or 15 wt%, or 10 wt%, or 5 wt%, or 2 wt%, or 1 wt%, or 0.1 wt% of a block copolymer. As used herein, a composition is free of a particular ingredient if it contains less than 0.1 wt% of the particular ingredient by total weight of the composition. As used herein in one embodiment, a composition is essentially
free of block copolymer if the block copolymer is present in such minor amounts that the clear visual determination described below is still obtained. The composition in one embodiment consists essentially of the propylene-based polymer component and optionally, other ingredients and additives, such that the clear visual determination is not adversely impacted. For purposes herein, the phrase "block copolymer" includes any manner of block copolymer having two or more polymer chains attached at their ends, including but not limited to diblock, triblock, and tetrablock copolymers. "Block copolymer" is further meant to include copolymers having any structure known to those of skill in the art, including but not limited to linear, radial or multi-arm star, multi-branched block copolymers, and random block copolymers. "Linear block copolymers" comprise two or more polymer chains in sequence. "Radial block copolymers" (or "star block copolymers") comprise more than two linear block copolymers attached at a common branch point. "Styrenic block copolymers" comprise a block copolymer having at least one block that is greater than 50% styrene. For purposes herein, block copolymers may be linear or radial, or combinations of linear and radial block copolymers. The block copolymers may or may not be hydrogenated.

Block copolymers comprising styrene include linear block copolymers of styrene and one or more conjugated dienes such as SI (styrene-isoprene), SIS (styrene-isoprene-styrene), SB (styrene-butadiene), SBS (styrene-butadiene-styrene), SIB (styrene-isoprene-butadiene), or combination thereof.

Block copolymers also include tetrablock or pentablock copolymers selected from A-B-A-B tetrablock copolymers or A-B-A-B-A pentablock copolymers and the like are also suitable such as SISI (styrene-isoprene-styrene-isoprene), SISB, SBSB, SBSI, SIBS, ISISI, ISISB, BSISB, ISBSI, BSBSB, and BSBSI block copolymers.

In one or more embodiments, the composition may include less than 30 wt%, or may be free of, or comprise less than about 0.01 wt% of linear block copolymer includes a linear polymer of the formula S--I--S or S--B-S, wherein S is substantially a polystyrene block, I is substantially a polyisoprene block, and B is substantially a polybutadiene block. The styrene content of the SBS block copolymer is typically from about 10 to about 45 wt%, or from about 15 to about 35 wt%, or from about 20 to 30 wt%. The SIS block copolymers may be prepared by well-known anionic solution polymerization techniques using lithium-type initiators such as disclosed in U.S. Patent Nos. 3,251,905 and 3,239,478. The SIS and the SBS copolymer may be a pure triblock (one having less than 0.1 wt% of diblock polymer, preferably 0% diblock polymer), or may contain from about 0.1 to about 85 wt%, or from about 0.1 to about 75 wt%, or from about 1 to about 65 wt%, or from about 5 to about 50 wt%, or from 5 to 25 wt%, or from 10 to 20 wt% diblock copolymer having the structure S--I or SB, respectively. The SI or SB diblock may be present as a residue from the manufacture of the triblock copolymer or may be separately blended with the triblock as a further technique for achieving target polystyrene content or modifying the cohesive properties of the composition. In one or more embodiments, the number average molecular weight of the diblock SI copolymers may range from about 100,000 to about 250,000.

### Hydrocarbon Tackifier Component

In one or more embodiments the adhesive compositions described herein comprise a hydrocarbon tackifier resin component, which may in turn comprise one or more hydrocarbon tackifier resins.

Hydrocarbon tackifier resins suitable for use according to one or more embodiments of the instant disclosure include, but are not limited to, aliphatic hydrocarbon resins, at least partially hydrogenated aliphatic hydrocarbon resins, aliphatic/aromatic hydrocarbon resins, at least partially hydrogenated aliphatic aromatic hydrocarbon resins, aromatic resins, at least partially hydrogenated aromatic hydrocarbon resins, cycloaliphatic hydrocarbon resins, at least partially hydrogenated cycloaliphatic resins, cycloaliphatic/aromatic hydrocarbon resins, cycloaliphatic/aromatic at least partially hydrogenated hydrocarbon resins, polyterpene resins, terpene-phenol resins, rosin esters, rosin acids, grafted resins, and mixtures of two or more of the foregoing. The hydrocarbon tackifiers may be polar or apolar.

In one embodiment, the tackifier component may comprise one or more hydrocarbon resins produced by the thermal polymerization of cyclopentadiene (CPD) or substituted CPD, which may further include aliphatic or aromatic monomers as described later. The hydrocarbon resin may be a non-aromatic resin or an aromatic resin. The hydrocarbon resin may have an aromatic content between 0 wt% and 60 wt%, preferably between 1% and 60%, or between 1% and 40%, or between 1% and 20%, or between 10% and 20%. In further embodiments, the hydrocarbon resin may have an aromatic content between 15% and 20%, or between 1% and 10%, or between 5% and 10%.

In another embodiment, the tackifier component may comprise hydrocarbon resins produced by the catalytic (cationic) polymerization of linear dienes. Such monomers are primarily derived from Steam Cracked Naptha (SCN) and include C5 dienes such as piperylene (also known as 1,3-pentadiene). Polymerizable aromatic monomers can also be used to produce resins and may be relatively pure, e.g., styrene, -methyl styrene, or from a C9-aromatic SCN stream. Such aromatic monomers can be used alone or in combination with the linear dienes previously described. "Natural" monomers can also be used to produce resins, e.g., terpenes such as alpha-pinene or beta-carene, either used alone or in high or low concentrations with other polymerizable monomers. Typical catalysts used to make these resins are AlCl3 and BF3, either alone or complexed. Mono-olefin modifiers such as 2-methyl, 2-butene may also be used to control the molecular weight distribution (MWD) of the final resin. The final resin may be partially or totally hydrogenated as described in further detail herein.

As used herein, aromatic content and olefin content are measured by 1H-NMR, as measured directly from the 1H NMR spectrum from a spectrometer with a field strength greater than 300 MHz, preferably 400 MHz. Aromatic content is the integration of aromatic protons versus the total number of protons. Olefin proton or olefinic proton content is the integration of olefinic protons versus the total number of protons.

In one or more embodiments, the resin may be at least partially hydrogenated or substantially hydrogenated. As used herein, "at least partially hydrogenated" means that the material contains less than 90% olefinic protons, or less than 75% olefinic protons, or less than 50% olefinic protons, or less than 40% olefinic protons, or less than 25% olefinic protons. As used herein, "substantially hydrogenated" means that the material contains less than 5% olefinic protons, or less than 4% olefinic protons, or less than 3% olefinic protons, or less than 2% olefinic protons. The degree of hydrogenation is typically conducted so as to minimize and preferably avoid hydrogenation of the aromatic bonds.

In one or more embodiments, hydrocarbon tackifier resins described herein may be uniquely characterized as totally or substantially amorphous in nature. This means that a glass transition temperature (Tg) is detectable, e.g., by Differential Scanning Calorimetry (DSC), but they have no melting point (Tm). To characterize these resins, it is generally accepted to use a test that roughly correlates with Tg, such as softening point (SP), which provides approximate, but not exact, values. The softening point (SP) of the resins is measured by a ring-and-ball softening point test according to ASTM E-28.

In some embodiments, the hydrocarbon resin may have a ring and ball softening point of from about 50°C to about 150°C, or from about 60°C to about 130°C, or from about 70°C to about 120°C, or from about 80°C to about 110°C, determined according to ASTM E-28.

In one or more embodiments of the invention, the hydrocarbon resin has a number average molecular weight (Mn) from about 400 to about 3000, a weight average molecular weight (Mw) from about 500 to about 6000, a z-average molecular weight (Mz) from about 700 to about 30,000 and a polydispersity (PD), defined as Mw/Mn, between about 1.5 and about 4. As used herein, molecular weights (number average molecular weight (Mn), weight average molecular weight (Mw), and z-average molecular weight (Mz)) are measured by size exclusion chromatography using a Waters 150 Gel Permeation Chromatograph equipped with a differential refractive index detector and calibrated using polystyrene standards. Samples are run in tetrahydrofuran (THF) (45°C). Molecular weights are reported as polystyrene-equivalent molecular weights and are generally measured in g/mol.

In an embodiment, the hydrocarbon tackifier resin component may comprise one or more oligomers such as dimers, trimers, tetramers, pentamers, and hexamers. The oligomers may be derived from a petroleum distillate boiling in the range of 30-210°C. The oligomers may be derived from any suitable process and are often derived as a byproduct of resin polymerization. Suitable oligomer streams may have molecular weights (Mn) between 130-500, more preferably between 130-410, more preferably between 130 - 350, or between 130 - 270, or between 200 - 350, or between 200 - 320. Examples of suitable oligomer streams include, but are not limited to, oligomers of cyclopentadiene and substituted cyclopentadiene, oligomers of C4-C6 conjugated diolefins, oligomers of C8-C10 aromatic olefins, and combinations thereof. Other monomers may be present. These include C4-C6 mono-olefins and terpenes. The oligomers may comprise one or more aromatic monomers and may be at least partially hydrogenated or substantially hydrogenated.

In an embodiment, the oligomers may be stripped from the resin before hydrogenation. The oligomers may also be hydrogenated with the resin and then stripped from the resin, yielding a hydrogenated resin and hydrogenated oligomers. In another embodiment, at least some of the oligomers are stripped before hydrogenation and at least some hydrogenated oligomers are stripped after hydrogenation. In yet another embodiment, the hydrogenated resin/oligomers product may be further processed together as a single mixture as described below. In yet another embodiment, the oligomers can be derived from any suitable source and hydrogenated (if necessary) before grafting so that the oligomers before grafting are typically at least partially hydrogenated and preferably substantially hydrogenated.

The hydrocarbon tackifier resin component may comprise one or more hydrocarbon tackifier resins. When the composition comprises a finite amount of a block copolymer, these resins may be chosen based upon their compatibility with the one or more block copolymers which comprise the block copolymer component of the adhesive composition. For example, certain tackifier resins may be better suited for use with SIS block copolymers, while other tackifier resins may be more compatible with SBS block copolymers.

Examples of commercially available SIS compatible tackifier resins include, but are not limited to, ESCOREZ 2203LC, ESCOREZ 1310LC, ESCOREZ 1304, ESCOREZ 5380, and ESCOREZ 5600, manufactured by ExxonMobil Chemical Company; Piccotac 1905 and EASTOTAC H-100, manufactured by Eastman Chemicals; QUINTONE D and QUINTONE U 185, manufactured by Nippon Zeon; MARUKARES R100, manufactured by Maruzen; and WINGTACK EXTRA and WINGTACK PLUS, manufactured by Cray Valley.

Examples of commercially available SBS compatible tackifier resins include, but are not limited to, ESCOREZ 2101, ESCOREZ 5690, and ESCOREZ 2173, manufactured by ExxonMobil Chemical Company; Regalrez 5095, Regalrez 3102, Staybelite Ester 3, and Pentalyn H, manufactured by Eastman Chemicals; Quintone U 190, manufactured by Nippon Zeon; Wingtack 86, manufactured by Cray Valley; and Sylvalite RE 885 and Sylvatac RE 85, available from Arizona Chemical.

In one or more embodiments, the hot melt pressure-sensitive adhesive compositions described herein may comprise from about 1 to about 50 wt%, or from about 5 to about 45%, or from about 10 to about 40 wt%, or from about 15 to about 35 wt% of the hydrocarbon tackifier resin component, based on the total weight of the composition.

### Process Oil Component

In one or more embodiments according to the instant disclosure, one or more process oils may be added to the hot melt pressure-sensitive adhesive compositions described herein. As used herein, the term "process oil" means both petroleum derived process oils and synthetic plasticizers.

Examples of process oils suitable for use herein include, but are not limited to, paraffinic or naphthenic oils such as Primol 352 or Core 600 fluid, produced by ExxonMobil Chemical France; and Nyflex 222B, available from Nynas AB.

Further process oils suitable for use herein include aliphatic naphthenic oils, white oils, and the like. Exemplary plasticizers and/or adjuvants include mineral oils, polybutenes, phthalates and the like. In one or more embodiments, the plasticizers may include phthalates such as diisoundecyl phthalate (DIUP), diisononylphthalate (DINP), dioctylphthalates (DOP), and polybutenes, such as Parapol 950 and Parapol 1300 available from ExxonMobil Chemical Company in Houston, Texas. Further useful plasticizers include those described in International Patent Application No. WO01/18109A1 and U.S. Application Publication No. 2004/0106723.

In one or more embodiments, the hot melt pressure-sensitive adhesive compositions described herein may comprise from about 1 to about 50 wt%, or from about 5 to about 40 wt%, or from about 10 to about 35 wt%, or from about 15 to about 30 wt% of the optional process oil component.

### Other Additives and Fillers

In some embodiments, one or more additional fillers or additives may be employed to achieve the properties and characteristics desired in the final adhesive formulation. Such additive and fillers are known in the art and may include, but are not limited to fillers, cavitating agents, antioxidants, surfactants, adjuvants, plasticizers, block, antiblock, colorants, color masterbatches, pigments, dyes, processing aids, UV stabilizers, neutralizers, lubricants, waxes, and/or nucleating agents. The additives may be present in any amount determined to be effective by those skilled in the art, such as for example from about 0.001 wt% to about 10 wt%.

Examples of suitable antioxidants include, but are not limited to, quinolein, e.g., trimethylhydroxyquinolein (TMQ); imidazole, e.g., zincmercapto toluoyl imidazole (ZMTI); and conventional antioxidants, such as hindered phenols, lactones, phosphates, and hindered amines. Further suitable anti-oxidants are commercially available from, for example, Ciba Geigy Corp. under the trade names Irgafos 168, Irganox 1010, Irganox 3790, Irganox B225, Irganox 1035, Irgafos 126, Irgastab 410, and Chimassorb 944.

Fillers, cavitating agents, and/or nucleating agents suitable for use herein may comprise granular, fibrous, and powder-like materials, and may include, but are not limited to, titanium dioxide, calcium carbonate, barium sulfate, silica, silicon dioxide, carbon black, sand, glass beads, mineral aggregates, talc, natural and synthetic clays, diatomaceous earth, and the like.

Processing aids, lubricants, waxes, and/or oils (e.g., oils described above) which may be employed in embodiments of the adhesive compositions disclosed herein include low molecular weight products such as wax, oil, or low Mn polymer (low meaning having an Mn less than 5000, preferably below 4000, or below 3000, or below 2500). Waxes may include polar or non-polar waxes, functionalized waxes, polypropylene waxes, polyethylene waxes, and wax modifiers.

The additives described herein can be added to the blend in pure form or in master batches.

In one or more embodiments, the adhesive compositions described herein may comprise one or more process oils as described above, but are otherwise substantially free of silicon oils or waxes. In an embodiment, the composition is removable and free of silicon oils and waxes, or in an embodiment comprises less than 0.01 wt% of a silicon oil and wax. By "substantially free of' is meant that any silicon oils or waxes in the adhesive composition are present as impurities only; no silicon oils or waxes are deliberately added to the adhesive formulation. In an embodiment, the composition is removable and comprises less than 0.01 wt% of a silicon oil and/or a silicon wax.

For purposes herein, an adhesive composition or an article comprising an adhesive composition is removable wherein the adhesive or the article comprising the adhesive can be applied to a surface and easily removed without leaving a substantial amount or without leaving any, or a substantial amount of residue as is commonly understood by one having minimal skill in the art. In an embodiment, the adhesive or the article comprising the adhesive is removable when it can be applied to a surface and easily removed leaving less than 0.1% of the adhesive originally present on the surface, based on the total amount of adhesive originally applied.

### Preparation of the Hot melt pressure-sensitive Adhesive Composition

In one or more embodiments, the components of the hot melt pressure-sensitive adhesive compositions described herein may be blended by mixing, using any suitable mixing device at a temperature above the melting point of the components, e.g., at 130 to 180°C, for a period of time sufficient to form a homogeneous mixture, normally from about 1 to about 120 minutes depending on the type of mixing device.

In the case of continuous mixing as practiced by most commercial manufacturers, a twin screw extruder may be used to mix the adhesive components. First the propylene-based polymer components and block copolymers when present are introduced into the extruder and mixed until the polymers have melted and are well mixed. Then the tackifiers are added, followed by any process oils which may be desired. To the extent pigments, antioxidants, fillers, or other additives are used, they are normally blended in with the propylene-based polymer components. The total mixing time is typically on the order of from about 1 to 5 minutes.

In the case of batch mixing, the propylene-based polymer component or components are added along with about 20% of the tackifier component. When the polymers and tackifier reach a homogeneous state, the remaining tackifier component is gradually added to the mix. Once all of the tackifier components have been added and homogeneous mix is achieved, the balance of the process oil, antioxidants, fillers, and any other additives are added. The total mixing time may run for up to 120 minutes.

### Adhesive Articles

In one or more embodiments adhesive tapes may be formed which comprise a substrate coated with one or more adhesive compositions as described herein. As used herein, the term "tape" is meant generically to encompass any manner of adhesive application, including but not limited to tapes, labels, stickers, decals, packaging applications, and the like. In an embodiment, the adhesive tape is removable as described herein.

The adhesive compositions described herein may be applied to any substrate. Suitable substrates may include, but are not limited to, wood, paper, cardboard, plastic, plastic film, thermoplastic, rubber, metal, metal film, metal foil (such as aluminum foil and tin foil), metallized surfaces, cloth, non-wovens (particularly polypropylene spun bonded fibers or non-wovens), spunbonded fibers, cardboard, stone, plaster, glass (including silicon oxide (SiOx) coatings applied by evaporating silicon oxide onto a film surface), foam, rock, ceramics, films, polymer foams (such as polyurethane foam), substrates coated with inks, dyes, pigments, PVDC and the like or combinations thereof. Additional substrates may include polyethylene, polypropylene, polyacrylates, acrylics, polyethylene terephthalate, or blends thereof. Corona treatment, electron beam irradiation, gamma irradiation, microwave or silanization may modify any of the above substrates.

The adhesive compositions of this invention may be applied to a substrate as a melt and then cooled. The adhesive composition may be applied to a substrate using conventional coating techniques such as spraying, roller coaters, die coaters and/or blade coaters, generally at a temperature of from about 150°C to about 200°C. In one or more embodiments, the adhesive composition is applied to a substrate using a slot die.

A slot die is a closed system where an adhesive composition is pumped through the system via a positive displacement pump. The slot die usually includes a rotating bar at the point of the outlet of the adhesive in order to maintain a smooth surface.

The substrate should be coated with sufficient adhesive composition to provide a dry coating weight of from about 10 to about 100, or from about 10 to about 50, or from about 15 to about 25 grams per square meter (g/m2).

After coating, the coated substrate is cut to the required dimension. In the manufacture of tape, the substrate is slit into strips and rolled into a finished product. The substrate may also be cut into shaped items to provide labels. In one or more embodiments, a release liner may also be employed if desired.

### Properties of the Adhesive Composition

In one or more embodiments, the hot melt pressure-sensitive adhesive compositions described herein may comprise from 5 wt% to 99 wt%, or greater than or equal to about 10 wt%, or 15 wt%, or 20 wt%, or 30 wt%, or 40 wt%, or 50 wt%, or 60 wt%, or 70 wt%, or 80 wt%, or 90 wt% or 95 wt% of the propylene-based polymer component. In embodiments, the hot melt pressure-sensitive adhesive compositions described herein consist essentially of the propylene-based polymer component, or consist essentially of the propylene-based polymer component and the hydrocarbon tackifier resin, or consist essentially of the propylene-based polymer component, the hydrocarbon tackifier resin, and the process oil, or consist essentially of the propylene-based polymer component, and one or more of the hydrocarbon tackifier resin component, the process oil component, and one or more additional fillers and/or additives including, but are not limited to fillers, cavitating agents, antioxidants, surfactants, adjuvants, plasticizers, block, antiblock, colorants, color masterbatches, pigments, dyes, processing aids, UV stabilizers, neutralizers, lubricants, waxes, and/or nucleating agents as described herein.

In one or more embodiments, the compositions disclosed herein comprise a hot melt pressure-sensitive adhesive comprising a propylene-based polymer component. In an embodiment, the hot melt pressure-sensitive adhesive comprises greater than or equal to 20 wt%, or 30 wt%, or 40 wt%, or 50 wt%, or 60 wt%, or 70 wt%, or 80 wt%, or 90 wt% or 95 wt% of the propylene-based polymer component. In an embodiment, the compositions may comprise a hot melt pressure-sensitive adhesive comprising less than or equal to 30 wt%, or 25 wt%, or 20 wt%, or 15 wt%, or 10 wt%, or 5 wt%, or 2 wt%, or 1 wt%, up to 0.1 wt% of a block copolymer component.

In an embodiment, the compositions comprise a hot melt pressure-sensitive adhesive comprising from about 1 to about 60 wt% of the hydrocarbon tackifier component. In an embodiment, the compositions comprise a hot melt pressure-sensitive adhesive comprising from about 1 to 30 wt% of a process oil.

In one or more embodiments, the adhesive composition has a viscosity greater than 500 mPa-s, or greater than 1,000 mPa-s, or greater than 5,000 mPa-s, or greater than 10,000 mPa-s, and less than 20,000 mPa-s, or less than 15,000 mPa-s (measured at 175°C), determined according to ASTM D 3236.

In an embodiment, the compositions comprise a hot melt pressure-sensitive adhesive wherein the propylene-based polymer component has a melt flow rate (MFR) of from about 1 to about 900 g/10 min, as measured according to ASTM D-1238 at 230°C, 2.16 kg.

In one or more embodiments, the initial 180° peel strength of the adhesive tape compositions described herein when adhered to steel is less than or equal to about 10, or less than or equal to about 8, or less than or equal to about 6, or less than or equal to about 4 N/25 mm (at a coating weight of about 20 g/m2). In an embodiment, the initial 180° peel strength of an adhesive tape on glass of from 0.1 to about 10 N/25 mm at a coating weight of 20 g/m2. In an embodiment, an initial 180° peel strength of an adhesive tape on polyethylene film of from 0.1 to about 10 N/25 mm at a coating weight of 20 g/m2. In the same or other embodiments, the initial 180° peel strength of the adhesive tape compositions described herein when adhered to glass is less than or equal to about 10, or less than or equal to about 5, or less than or equal to about 4, or less than or equal to about 3 N/25 mm (at a coating weight of about 20 g/m2). In the same or other embodiments, the initial 180° peel strength of the adhesive tape compositions described herein when adhered to polyethylene film is less than or equal to about 10, or less than or equal to about 5, or less than or equal to about 3, or less than or equal to about 2 N/25 mm (at a coating weight of about 20 g/m2).

In one or more embodiments, the 180° peel strength of the adhesive tape compositions described herein after one week incubation at 60°C when adhered to steel is less than or equal to about 35, or less than or equal to about 30, or less than or equal to about 25, or less than or equal to about 20 N/25 mm (at a coating weight of about 20 g/m2). In the same or other embodiments, the 180° peel strength of the adhesive tape compositions described herein after one week incubation at 60°C when adhered to glass is less than or equal to about 30, or less than or equal to about 25, or less than or equal to about 20, or less than or equal to about 15 N/25 mm (at a coating weight of about 20 g/m2). In the same or other embodiments, the 180° peel strength of the adhesive tape compositions described herein after one week incubation at 60°C when adhered to polyethylene film is less than or equal to about 15, or less than or equal to about 10, or less than or equal to about 8, or less than or equal to about 6 N/25 mm (at a coating weight of about 20 g/m2).

As used herein, the 180° peel strength of a sample is determined according to FINAT testing method 1 (FTM 1).

In one or more embodiments, the shear of the adhesive tapes described herein when adhered to steel (25 mm^{∗}25 mm, 1 kg) at room temperature (23°C+-.2°C, 50%.+-.5% RH) is greater than or equal to about 10 hours, or greater than or equal to about 15 hours, or greater than or equal to about 20 hours. As used herein, shear is determined by FINAT testing method 8 (FTM 8).

In an embodiment, the compositions comprise a hot melt pressure-sensitive adhesive having a clear visual determination such that the compositions are suitable for use in no-label look labels. While a number of determinations are suitable for determining a visually clear composition, the instant compositions do not lend themselves to standard testing methods directed to clarity due to the difficulty in providing a sample with a uniform thickness for spectroscopic testing. Accordingly, the following test is used to determine the visual clarity of the instant compositions, which allows for an objective determination of visual clarity sufficient for use as a no-label look label, or the like. In an embodiment, the composition has a clear visual determination, wherein the visual determination consists of providing a testing square consisting of a piece of white 20 weight paper having a brightness of 90%. The paper may have a higher weight, and 20 pound weight paper should be considered the minimum for use. Likewise, the paper may have a higher brightness, and 90% brightness should be considered the minimum brightness. The testing square having a printed portion comprising the capital letters "O" and "Q" printed with a laser printer to be visually distinguishable at 1 space apart from each other thereon in black print using Helvetica number 10 font; depositing a sample of the composition at a temperature above the melting point of the composition onto the testing square using a flat applicator to cover the printed portion of the testing square with a film of the composition having a thickness of 1 mm, followed by allowing the composition to cool to a temperature of 25°C to produce a prepared test sample. The thickness may be greater than 1 mm, and should be at least 1 mm. Accordingly, a thickness of 1 mm to 5 mm may be acceptable, since clarity at greater than 1 mm, e.g., 5 mm, would indicate clarity at 1 mm. The method then includes visually determining the clarity of the prepared test sample wherein the prepared test sample has a clear visual determination when an observer having essentially 20:20 vision is able to visually distinguish the letter "O" from the letter "Q" in the printed portion of the testing square at a distance of about 30 cm from the prepared test sample at an illumination of at least 1000 lux, which should be considered the minimum, with an illumination from 1000 lux to 2000 lux being acceptable.

For purposes herein, a piece of white 20 pound or higher weight paper having a brightness of greater than 90% is exemplified by standard copier or printer paper as generally known in the art and which is readily available. For purposes herein the testing square having a printed portion comprising the capital letters "O" and "Q" printed with a laser printer to be visually distinguishable at 1 space apart from each other thereon in black ink using Helvetica number 10 font refers to a printing utilizing a typical laser printer e.g., an HP LaserJet™ or the like, utilizing black toner or ink (black print) to produce a black image on a white background in which the letters O and Q are printed such that the letters are readily distinguishable by an observer having about 20/20 vision at a distance of about 30 cm between the observer and the testing sample. Accordingly, the test involves the ability for an observer having 20/20 vision, or vision corrected to be essentially 20/20 being able to discern the letter O from the letter Q at a typical reading distance in an environment having an amount of illumination suitable for reading (i.e., at an illumination of from 1000 lux to 2000 lux).

The Helvetica font refers to the font developed in 1957 by Max Miedinger with Eduard Hoffmann at the Haas'sche Schriftgiesserei (Haas Type Foundry) of Münchenstein, Switzerland, a new sans-serif typeface originally referred to as Neue Haas Grotesk, and based on the Normal Grotesk of Schelter-Grotesk and Haas. In 1960, the name of the typeface was changed to Helvetica. For purposes herein, the capital letters "O" and "Q" printed using 10-point Helvetica font are defined as the same printed using a common laser printer on plain copier paper as described herein, as is readily understood by one having minimal skill in the art.

The deposit of the sample of the composition is conducted at a temperature above the melting point of the composition, typically between about 60 and 180°C onto the testing square using a flat applicator to cover the printed portion of the testing square with a film of the composition having a thickness of 1 mm to 5 mm, followed by allowing the composition to cool to a temperature of 25°C to produce a prepared test sample. By specifying a minimum thickness of 1 mm (i.e., a thickness of 1 mm to 5 mm), the difficulty in producing a sample for observation is overcome since a clear visual determination at a greater thickness implies that a clear visual determination would be obtained at a thickness of 1 mm. The flat applicator may be a spatula or the like, and the molten composition is simply spread over the letters on the testing square and allowed to cool to determine the clarity of the composition. A clear visual determination represents the ability of an observer having essentially 20:20 vision is able to visually distinguish the letter "O" from the letter "Q" in the printed portion of the testing square at a distance of about 30 cm from the prepared test sample at an illumination of from 1000 lux to 2000 lux. A hazy or not clear determination occurs when the letter "O" cannot be distinguished from the letter "Q" in the printed portion of the testing square at a distance of about 30 cm from the prepared test sample at an illumination of from 1000 lux to 2000 lux.

Inherent in the above test is a sample essentially free of bubbles and which is fully mixed and homogeneous over the printed test area.

In an embodiment, the instant adhesive compositions show improved solvent resistance in label applications. Typical adhesive compositions are readily soluble in aromatic organic solvents, and are typically dissolved at 50 wt% in toluene for color determination and the like. In contrast, the adhesive compositions disclosed herein, comprising the propylene-based polymer component and less than 30 wt% of a block copolymer, are not readily soluble in toluene. In an embodiment, the propylene-based polymer component has a solubility in toluene of less than 50 wt%, or 40 wt%, or 30 wt%, or 20 wt%, or 10 wt% at 25°C. The propylene-based polymer component simply "gels" in toluene, and is not readily soluble therein. This attribute of the adhesive results in an adhesive having improved solvent resistance as compared to adhesives which are soluble in toluene at 50 wt% or above at 25°C.

In an embodiment, the adhesive composition is clear colorless, having an APHA of less than 10, determined according to ASTM D1209, wherein APHA is a single number yellowness index where each APHA unit is based on a dilution of the 500 ppm stock solution of PtCo. Distilled water has an APHA value of zero. The stock solution has an APHA value of 500. The PtCo scale and Hazen scale are also based on this sample reagent dilution and have units equivalent to APHA units.

Further embodiments according to the instant disclosure are described with reference to the following lettered paragraphs. Not necessarily all of the following embodiments are in accordance with the invention as claimed.
A. A composition comprising a hot melt pressure-sensitive adhesive comprising a propylene-based polymer component comprising from about 60 to about 98 wt% propylene and from about 2 to about 40 wt% of one or more of ethylene and C₄-C₁₀ alpha-olefins, the propylene-based elastomer component having a melting point less than or equal to about 130°C and a triad tacticity greater than about 75%; the composition free of or comprising less than or equal to about 30 wt% of a block copolymer.
B. The composition according to embodiment A, wherein the propylene-based polymer component comprises from about 75 to about 98 wt% propylene and from about 2 to about 25 wt% of one or more of ethylene and C₄-C₁₀ alpha-olefins, and wherein the propylene-based elastomer component has a melting point less than or equal to about 120°C.
C. The composition according to embodiment A or B, wherein the propylene-based polymer component further has a heat of fusion less than about 90 J/g.
D. The composition according to any one of embodiments A-C, wherein the propylene-based polymer component has a melt flow rate (MFR) of from about 1 to about 900 g/10 min, as measured according to ASTM D-1238 at 230°C, 2.16 kg.
E. The composition according to any one of embodiments A-D, having a viscosity of less than or equal to about 150,000 mPa-s at 175°C determined according to ASTM D 3236, or an equivalent thereof.
F. The composition according to any one of embodiments A-E free of or comprising less than about 0.01 wt% of a block copolymer.
G. The composition according to any one of embodiments A-F free of or comprising less than about 0.01 wt% of a block copolymer comprising styrene.
H. The composition according to any one of embodiments A- G, comprising from about 1 to about 60 wt% of a hydrocarbon tackifier resin.
I. The composition according to any one of embodiments A-H, wherein the hydrocarbon tackifier resin has a ring-and-ball softening point of from about 50 to about 150°C.
J. The composition according to any one of embodiments A-I, comprising from about 1 to about 30 wt% of a process oil.
K. The composition according to any one of embodiments A-J, wherein the composition is removable and wherein the composition comprises less than 0.01 wt% of a silicon oil, and/or a silicon wax.
L. The composition according to any one of embodiments A-K, having a clear visual determination, wherein the visual determination consists of providing a testing square consisting of a piece of white 20 pound paper having a brightness of 90%, the testing square having a printed portion comprising the capital letters "O" and "Q" printed with a laser printer to be visually distinguishable at 1 space apart from each other thereon in black ink using Helvetica number 10 font;
   depositing a sample of the composition at a temperature above the melting point of the composition onto the testing square using a flat applicator to cover the printed portion of the testing square with a film of the composition having a thickness of 1 mm, followed by allowing the composition to cool to a temperature of 25°C to produce a prepared test sample; and
   visually determining the clarity of the prepared test sample wherein the prepared test sample has a clear visual determination when an observer having essentially 20:20 vision is able to visually distinguish the letter "O" from the letter "Q" in the printed portion of the testing square at a distance of about 30 cm from the prepared test sample at an illumination of 1000 lux.
M. The composition according to any one of embodiments A-L, wherein the propylene-based polymer component has a solubility in toluene of less than 10 wt% at 25°C.
N. An adhesive article comprising a substrate and a hot melt pressure-sensitive adhesive composition according to any one of embodiments A-M.
O. The adhesive article according to embodiment N, comprising a substrate and a hot melt pressure-sensitive adhesive composition comprising a propylene-based polymer component comprising from about 60 to about 98 wt% propylene and from about 2 to about 40 wt% ethylene and/or C₄-C₁₀ alpha-olefins, the propylene-based elastomer component having a melting point less than or equal to about 130°C and a triad tacticity greater than about 75%; the adhesive composition comprising less than about 0.01 wt% of a block copolymer.
P. The adhesive article according to embodiment N or O, wherein the adhesive composition comprises from about 1 to about 50 wt% of a hydrocarbon tackifier resin.
Q. The adhesive article according to any one of embodiments N-P, wherein the hydrocarbon tackifier resin has a ring-and-ball softening point of from about 50 to about 140°C.
R. The adhesive article according to any one of embodiments N-Q, wherein the adhesive composition has a clear visual determination, wherein the visual determination consists of providing a testing square consisting of a piece of white copier paper having a printed portion comprising the capital letters "O" and "Q" printed 1 space apart from each other thereon in black ink using Helvetica number 10 font;
   depositing a sample of the composition at a temperature above the melting point of the composition onto the testing square using a flat applicator to cover the printed portion of the testing square with a film of the composition having a thickness from about 1 to 5 mm, followed by allowing the composition to cool to a temperature of 25°C to produce a prepared test sample; and
   visually determining the clarity of the prepared test sample wherein the prepared test sample has a clear visual determination when an observer having essentially 20:20 vision is able to visually distinguish the letter "O" from the letter "Q" in the printed portion of the testing square at a distance of about 30 cm from the prepared test sample at an illumination of from 1000 lux.
S. The adhesive article according to any one of embodiments N-R, wherein the adhesive article is an adhesive tape having an initial 180° peel strength of the tape on glass of less than or equal to about 10 N/25 mm at a coating weight of about 20 g/m².
T. The adhesive article according to any one of embodiments N-S, wherein the adhesive article is an adhesive tape having an initial 180° peel strength of the tape on polyethylene film of less than or equal to about 10 N/25 mm at a coating weight of about 20 g/m².

### EXAMPLES

The following examples are illustrative of the invention. Materials used in the preparation of the adhesive compositions as identified in the examples are as follows:

| | | | |
|---|---|---|---|
| V4186 | Vector 4186A | Styrenic Block Copolymer (Dexco Polymers) | |
| E-5400 | Escorez 5400 | tackifier (ExxonMobil) | |
| Flexon 876 | | paraffinic processing oil | |
| IRG 1010 | Irganox 1010 | antioxidant | |
| VMX 6202 | VISTAMAXX 6202 | propylene-based polymer | ExxonMobil |
| VMX 2320 | VISTAMAXX 2320 | propylene-based polymer | ExxonMobil |

VISTAMAXX 6202 is a propylene-ethylene elastomeric copolymer having an ethylene content of approximately 15 wt% and a Melt Flow Rate (MFR) (230°C, 2.16 kg) of approximately 18 g/10 min as determined by ASTM D-1238.

Irganox 1010 is a phenolic antioxidant having a melting point from about 110°C to about 125°C and a density (at 20°C) of about 1.15 g/cm3. Irganox 1010 is available from Ciba Specialty Chemicals, Switzerland.

The adhesive properties reported herein were evaluated according to FINAT testing methods (FINAT, P.O. Box 85612, 2508 CH, The Hague, The Netherlands; www.finat.com).

LAB 1.1: 180° peel on different substrates (PE & Glass) @ Room temperature. This method is based on Finat Test Method no. 1 - Peel adhesion (180°). The test method is designed to quantify the permanence of adhesion or peelability of self-adhesive pressure sensitive materials. It is the force required to peel off a pressure sensitive adhesive from a standard test plate at a specified angle (180°) and speed.

LAB 1.2: 180° peel on different substrates (PE & Glass) @ fridge or lower temperature is the same as LAB 1.1, but applied at lower temperature (3°C).

LAB 2.1: Looptack on different substrates (PE & Glass) @ Room temperature, is a method based on Finat Test Method no. 9 - 'Loop' tack measurement. This test method describes the evaluation of the loop tack developed by a label adhesive onto a standard test plate at room temperature. The loop tack is expressed as the force required separating a loop of adhesive from a standard test plate. The contact between the loop of adhesive film and the test plate is realized without any additional force.

LAB 2.2: Looptack on different substrates (PE & Glass) @ fridge or lower temperature is the same as LAB 2.1, but applied at lower temperature (3°C).

HMA 1: T-peel of laminate is an ExxonMobil Internal method, indicates low speed release force. LAB 4: Shear resistance is based on Finat Test Method no. 8 - Resistance to shear from a standard surface. This procedure describes the evaluation of the resistance to shear, under specified stress and temperature, of a label pressure sensitive adhesive adhered onto a reference substrate, in this case stainless steel.

ETM-e 31 Brookfield viscosity is based on ASTM D-3236. This testing method describes the determination of the melt viscosity of hotmelt adhesives by means of a Brookfield rotoviscometer.

LAB 13: Mandrel hold is a method based on Finat Test Method no. 19 - Mandrel hold. This test is used to determine the resistance of a self-adhesive label to lift from an external curved surface. This surfaces as used in PM are PE and glass.

Hot melt pressure-sensitive adhesive blend compositions were prepared according to the formulations shown in Table 1. All amounts are reported in weight percent based on the total weight of block copolymer, hydrocarbon tackifier resin, propylene-based polymer, and other components in the adhesive blend.

**Table 1**

| **Component** | **Comp. 1** | **Sample 2** | **Sample 3** | **Sample 4** | **Sample 5** | **Sample 6** |
|---|---|---|---|---|---|---|
| Nominal proportions | 32% BCP | 29% BCP | 27% BCP | 26% BCP | 22% BCP | 0% BCP |
| | 0% VMX | 10% VMX | 15% VMX | 20% VMX | 30% VMX | 32% VMX |
| V4186 | 32 | 28.8 | 27.2 | 25.6 | 22.4 | 0 |
| VMX 6202 | 0 | 3.2 | 4.8 | 6.4 | 9.6 | 32 |
| ES400 | 50 | 50 | 50 | 50 | 50 | 50 |
| FLEXON 876 | 18 | 18 | | 18 | 18 | 18 |
| IRG 1010 | 0.3 | 0.3 | 0.3 | 0.3 | 0.3 | 0.3 |

A series of adhesive labels were prepared by mixing the blend compositions as set forth in Table 1 in a two blade mixer at 145°C for a period of 70 minutes. The composition was then heated to a temperature of 175°C and then pumped through a coating die onto a label paper substrate. The weight of the applied coating layer ranged from about 19 to 21 g/m2. After coating, the paper was laminated to a release liner and the resulting adhesive tape was wound and cut.

Performance of the adhesive tapes on a variety of substrates is reported in Table 2. As used in Table 2, "af' means that the experimental tapes exhibited adhesive failure, and "cf' means that the experimental tapes exhibited a clean break in the adhesive layer, while some adhesive remained on the surface of the substrate after the adhesive tape was removed (cohesive failure). "Fogging" means that visible adhesive residue is left behind on the substrate. The polyethylene film used was LK151 BW (ExxonMobil).

**Table 2**

| **Test** | **Comp. 1** | **Sample 2** | **Sample 3** | **Sample 4** | **Sample 5** | **Sample 6** |
|---|---|---|---|---|---|---|
| Visual Test | Hazy - not clear - Fail | Not clear - Fail | Not clear - Fail | Not clear - Fail | Not clear - Fail | Clear-Pass |
| Blend viscosity @ 175°C (mPa.s) | 8600 | 8000 | 8500 | 9650 | 1160 | 38000 |

| Adhesive properties at 25°C, 20 days after sample preparation | | | | | | |
|---|---|---|---|---|---|---|
| 180° Peel on Glass (N/25mm) | pt | pt | pt | pt | pt | pt |
| 180° Peel on PE (N/25mm) | pt | pt | pt | pt | pt | pt |
| Loop tack Glass (N) | 12.3 af | 14.7 af | 14.1 af | 13.1 af | 16.5 af | 9.0 jerking pt |
| Loop tack PEs (N) | 10.7 af | 12.9 af | 13.61 af | 13.9 af | 13.7 af | pt |
| Loop tack humid PE (N) | 10.8 af | 4.0 af | 6.7 af | 3.6 af | 5.5 af | 0.1 af |
| T-Peel on label samples @1000 mm/min | 2.5 | 4.2 | 4.2 | 4.7 | 5.1 | 6.3 |
| Shear at 25°C Steel 25^{∗}25mm-1kg | >300 | >300 | >300 | >300 | >260 cf | 76 cf |

| Adhesive properties at 3°C, 20 days after sample preparation | | | | | | |
|---|---|---|---|---|---|---|
| 180° Peel on Glass (N/25mm) | pt | pt | pt | pt | pt | pt |
| 180° Peel on PE (N/25mm) | pt | pt | pt | pt | pt | pt |
| Loop tack Glass (N) | pt | pt | pt | pt | pt | pt |
| Loop tack PEs (N) | 14.9 af | pt | pt | pt | pt | 2.0 |

| Mandrel Test (mm) | | | | | | |
|---|---|---|---|---|---|---|
| 24 hrs on glass | 1.0 | 0.6 | 0.4 | 0.4 | 0.4 | 1.0 |
| 24 hrs on PE | 0 | 0 | 0 | 0 | 0 | 0 |
| 1 week on glass | 1.8 | 0.9 | 0.6 | 0.8 | 0.9 | 2.0 |
| 1 week on PE | 0 | 0 | 0 | 0 | 0 | 0.1 |
| 2 weeks on glass | 1.9 | 0.9 | 0.9 | 0.8 | 0.9 | 2.4 |
| 2 weeks on PE | 0.6 | 0 | 0 | 0 | 0 | 0.1 |

| | | | | | | |
|---|---|---|---|---|---|---|
| Notes for Table 2: af - adhesion failure; cf - cohesion failure; pt - paper tear; Humid PE - conditioned at 5°C for 1 hr, samples labeled at room temperature | | | | | | |

As shown in Table 2, the adhesive compositions according to the invention demonstrate comparative properties to those comprising block copolymer, with improved clarity over the comparative example when the composition is free of the block copolymer.

The hot melt PSA (HMPSA) formulations according to the instant disclosure produced a very clear adhesive when no SIS (block copolymer) was added to formulation. Blending of the propylene copolymer also resulted in less entrapped atmospheric gas. Besides good optical properties, it was also noticed that the adhesives according to the instant disclosure showed good solvent resistance. This was exemplified in failed attempts to characterize the color of the compositions. The method for measuring adhesive color involved dissolution in a suitable hydrocarbon solvent such as xylene or toluene. The instant adhesive systems swelled in such solvents; however, they did not completely dissolve. Although this presented a problem in measuring color, it did suggest that such adhesive systems are resistant to solvents that easily dissolve other typical HMPSA systems used in the industry. Such behavior results in adhesive compositions or systems suitable for specialty label applications where enhanced solvent resistance is necessary.

Additionally, the adhesive compositions disclosed herein also exhibited reduced skinning during accelerated heat aging when compared to traditional SIS-based adhesives, and when properly tackified, the inventive adhesives demonstrated superior shear properties, good removability and excellent wetting of standard substrates. Skinning refers to a layer of mainly oxidative or otherwise degraded material, visually different from bulk of molten adhesive. Skinning can take part on a section of the top layer of the molten adhesive and in extreme cases can grow over the entire surface while thickening to several mm. The adhesive compositions of the instant disclosure also provided improved wetting of low energy surfaces (LDPE, for example). The data further show that addition of the propylene-based polymer in the inventive compositions described herein improved internal cohesive strength of the adhesive and thereby reduced the occurrence of cohesive failure or fogging.

For purposes of convenience, various specific test procedures are identified above for determining certain properties. However, when a person of ordinary skill reads this patent and wishes to determine whether a composition or polymer has a particular property identified in a claim, then any published or well-recognized method or test procedure can be followed to determine that property, although the specifically identified procedure is preferred. Each claim should be construed to cover the results of any of such procedures, even to the extent different procedures can yield different results or measurements. Thus, a person of ordinary skill in the art is to expect experimental variations in measured properties that are reflected in the claims.

Certain embodiments and features have been described using a set of numerical upper limits and a set of numerical lower limits. It should be appreciated that ranges from any lower limit to any upper limit are contemplated unless otherwise indicated. Certain lower limits, upper limits and ranges appear in one or more claims below. All numerical values are "about" or "approximately" the indicated value, and take into account experimental error and variations that would be expected by a person having ordinary skill in the art.

## Claims

1. A hot melt pressure-sensitive adhesive composition comprising a propylene-based polymer component comprising from 60 to 98 wt% propylene and from 2 to 40 wt% of one or more of ethylene and C₄-C₁₀ alpha-olefins, based on the weight of the propylene-based polymer component, the propylene-based polymer component having a melting point less than or equal to 130°C and a triad tacticity greater than 75%; the hot melt pressure-sensitive adhesive composition comprising from 0.1 to 30 wt% of a block copolymer based on the weight of the hot melt pressure sensitive adhesive composition, and having a viscosity of less than 20,000 mPa-s at 175°C determined according to ASTM D 3236.

2. The hot melt pressure-sensitive adhesive composition of claim 1, wherein the propylene-based polymer component comprises from 75 to 98 wt% propylene and from 2 to 25 wt% of one or more of ethylene and C₄-C₁₀ alpha-olefins, and wherein the propylene-based polymer component has a melting point less than or equal to 120°C.

3. The hot melt pressure-sensitive adhesive composition of claim 1, wherein the propylene-based polymer component further has a heat of fusion less than 90 J/g.

4. The hot melt pressure-sensitive adhesive composition of claim 1, wherein the propylene-based polymer component has a melt flow rate (MFR) of from 1 to 900 g/10 min, as measured according to ASTM D-1238 at 230°C, 2.16 kg.

5. The hot melt pressure-sensitive adhesive composition of claim 1, comprising from 1 to 60 wt% of a hydrocarbon tackifier resin based on the weight of the hot melt pressure sensitive adhesive.

6. The hot melt pressure-sensitive adhesive composition of claim 1, having a clear visual determination, wherein the visual determination consists of providing a testing square consisting of a piece of white 20 pound weight paper having a brightness of 90%, the testing square having a printed portion comprising the capital letters "O" and "Q" printed with a laser printer to be visually distinguishable at 1 space apart from each other thereon in black text using 10-point Helvetica font;
depositing a sample of the hot melt pressure-sensitive adhesive composition at a temperature above the melting point of the hot melt pressure-sensitive adhesive composition onto the testing square using a flat applicator to cover the printed portion of the testing square with a film of the hot melt pressure-sensitive adhesive composition having a thickness of 1 mm, followed by allowing the hot melt pressure-sensitive adhesive composition to cool to a temperature of 25°C to produce a prepared test sample; and
visually determining the clarity of the prepared test sample wherein the prepared test sample has a clear visual determination when an observer having essentially 20:20 vision is able to visually distinguish the letter "O" from the letter "Q" in the printed portion of the testing square at a distance of about 30 cm from the prepared test sample at an illumination of 1000 lux.

7. The hot melt pressure-sensitive adhesive composition of claim 1, wherein the propylene-based polymer component has a solubility in toluene of less than 10 wt% at 25°C.

8. An adhesive article comprising a substrate and a hot melt pressure-sensitive adhesive according to claim 1.

9. The adhesive article of claim 8, wherein the hot melt pressure-sensitive adhesive composition comprises from 1 to 60 wt% of a hydrocarbon tackifier resin based on the weight of the hot melt pressure-sensitive adhesive.

## Patentansprüche

1. Heißschmelz-Haftklebstoffzusammensetzung, die Polymerkomponente auf Propylenbasis umfasst, die 60 bis 98 Gew.% Propylen und 2 bis 40 Gew.% von einem oder mehreren von Ethylen und C₄- bis C₁₀-α-Olefinen umfasst, bezogen auf das Gewicht der Polymerkomponente auf Propylenbasis, wobei die Polymerkomponente auf Propylenbasis einen Schmelzpunkt kleiner als oder gleich 130°C und eine Triadentaktizität größer als 75 % aufweist, wobei die Heizschmelz-Haftklebstoffzusammensetzung 0,1 bis 30 Gew.% Blockcopolymer umfasst, bezogen auf das Gewicht der Heizschmelz-Haftklebstoffzusammensetzung, und eine Viskosität von weniger als 20 000 mPa·s bei 175°C aufweist, bestimmt gemäß ASTM D 3236.

2. Heißschmelz-Haftklebezusammensetzung nach Anspruch 1, bei der die Polymerkomponente auf Propylenbasis 75 bis 98 Gew.% Propylen und 2 bis 25 Gew.% von einem oder mehreren von Ethylen und C₄- bis C₁₀-α-Olefin umfasst, und wobei die Polymerkomponente auf Propylenbasis einen Schmelzpunkt von weniger als oder gleich 120°C aufweist.

3. Heißschmelz-Haftklebstoffzusammensetzung nach Anspruch 1, bei der die Polymerkomponente auf Propylenbasis ferner eine Schmelzwärme von weniger als 90 J/g aufweist.

4. Heißschmelz-Haftklebstoffzusammensetzung nach Anspruch 1, bei der die Polymerkomponente auf Propylenbasis eine Schmelzflussrate (MFR) von 1 bis 900 g/10 min aufweist, gemessen gemäß ASTM D-1238 bei 230°C, 2,16 kg.

5. Heißschmelz-Haftklebstoffzusammensetzung nach Anspruch 1, die 1 bis 60 Gew.% Kohlenwasserstoffklebrigmacherharz umfasst, bezogen auf das Gewicht des Heißschmelz-Haftklebstoffs.

6. Heißschmelz-Haftklebstoffzusammensetzung nach Anspruch 1 mit einer klaren visuellen Bestimmung, bei der die visuelle Bestimmung aus folgendem besteht:
Bereitstellen eines Testquadrats, das aus einem Stück weißem 20 Pfund-Gewicht-Papier mit einer Helligkeit von 90 % besteht, wobei das Testquadrat einen bedruckten Abschnitt aufweist, welcher die Großbuchstaben "O" und "Q" umfasst, die mit einem Laserdrucker so gedruckt sind, dass sie mit 1 Leerzeichen Abstand zueinander in schwarzem Text unter Verwendung einer Schriftart von Helvetica 10 pt visuell unterscheidbar sind,
Auftragen einer Probe der Heißschmelz-Haftklebstoffzusammensetzung bei einer Temperatur oberhalb des Schmelzpunkts der Heizschmelz-Haftklebstoffzusammensetzung auf dem Testquadrat unter Verwendung eines flachen Applikators, um den bedruckten Abschnitt des Testquadrats mit einem Film der Heißschmelz-Haftklebstoffzusammensetzung mit einer Dicke von 1 mm zu bedecken, woraufhin die Heißschmelz-Haftklebstoffzusammensetzung auf eine Temperatur von 25°C abkühlen gelassen wird, um eine vorbereitete Testprobe zu produzieren; und
visuelles Bestimmen der Klarheit der vorbereiteten Testprobe, wobei die vorbereitete Testprobe eine klare visuelle Bestimmung aufweist, wenn ein Beobachter mit einer Sehschärfe von im Wesentlichen 20:20 in der Lage ist, den Buchstaben "O" von dem Buchstaben "Q" in dem bedruckten Abschnitt des Testquadrats in einem Abstand von etwa 30 cm zu der vorbereiteten Testprobe bei einer Beleuchtung von 1000 Lux visuell zu unterscheiden.

7. Heißschmelz-Haftklebstoffzusammensetzung nach Anspruch 1, bei der die Polymerkomponente auf Propylenbasis eine Löslichkeit in Toluol von weniger als 10 Gew.% bei 25°C aufweist.

8. Klebstoffgegenstand, der Substrat und Heißschmelz-Haftklebstoff gemäß Anspruch 1 umfasst.

9. Klebstoffartikel nach Anspruch 8, wobei die Heißschmelz-Haftklebstoffzusammensetzung 1 bis 60 Gew.% Kohlenwasserstoffklebrigmacherharz umfasst, bezogen auf das Gewicht des Heißschmelz-Haftklebstoffs.

## Revendications

1. Composition d'adhésif sensible à la pression thermofusible comprenant un constituant polymère à base de propylène comprenant de 60 à 98 % en poids de propylène et de 2 à 40 % en poids d'éthylène et/ou d'alpha-oléfines en C₄-C₁₀, rapporté au poids du constituant polymère à base de propylène, le constituant polymère à base propylène ayant un point de fusion inférieur ou égal à 130 °C et une tacticité triadique supérieure à 75 % ; la composition d'adhésif sensible à la pression thermofusible comprenant de 0,1 à 30 % en poids d'un copolymère séquencé, rapporté au poids de la composition d'adhésif sensible à la pression thermofusible, et ayant une viscosité de moins de 20 000 mPa-s à 175 °C déterminée selon la méthode ASTM D-3236.

2. Composition d'adhésif sensible à la pression thermofusible de la revendication 1, dans laquelle le constituant polymère à base de propylène comprend de 75 à 98 % en poids de propylène et de 2 à 25 % en poids d'éthylène et/ou d'alpha-oléfines en C₄-C₁₀, et dans laquelle le constituant polymère à base de propylène a un point de fusion inférieur ou égal à 120 °C.

3. Composition d'adhésif sensible à la pression thermofusible de la revendication 1, dans laquelle le constituant polymère à base de propylène a en outre une chaleur de fusion inférieure à 90 J/g.

4. Composition d'adhésif sensible à la pression thermofusible de la revendication 1, dans laquelle le constituant polymère à base de propylène a un indice de fluidité (IF) de 1 à 900 g/10 min, tel que mesuré selon la méthode ASTM D-1238 à 230 °C, 2,16 kg.

5. Composition d'adhésif sensible à la pression thermofusible de la revendication 1, comprenant de 1 à 60 % en poids d'une résine hydrocarbonée collante, rapporté au poids de l'adhésif sensible à la pression thermofusible.

6. Composition d'adhésif sensible à la pression thermofusible de la revendication 1, ayant une détermination visuelle transparente, la détermination visuelle consistant à se procurer un carré d'essai composé d'un morceau de papier blanc d'un poids de 20 livres ayant une blancheur de 90 %, le carré d'essai ayant une partie imprimée comprenant les lettres capitales « 0 » et « Q » imprimées avec une imprimante laser pour qu'on puisse les distinguer visuellement à 1 espace l'une de l'autre dans un texte noir utilisant la police Helvetica 10 points ;
déposer un échantillon de la composition d'adhésif sensible à la pression thermofusible à une température supérieure au point de fusion de la composition d'adhésif sensible à la pression thermofusible sur le carré d'essai en utilisant un applicateur plat pour recouvrir la partie imprimée du carré d'essai avec un film de la composition d'adhésif sensible à la pression thermofusible ayant une épaisseur de 1 mm, puis laisser la composition d'adhésif sensible à la pression thermofusible refroidir jusqu'à une température de 25 °C pour produire un échantillon d'essai préparé ; et
déterminer visuellement la transparence de l'échantillon d'essai préparé, l'échantillon d'essai préparé ayant une détermination visuelle transparente quand un observateur ayant une vision essentiellement de 20:20 est capable de distinguer visuellement la lettre « 0 » de la lettre « Q » dans la partie imprimée du carré d'essai à une distance d'environ 30 cm de l'échantillon d'essai préparé sous un éclairage de 1000 lux.

7. Composition d'adhésif sensible à la pression thermofusible de la revendication 1, dans laquelle le constituant polymère à base de propylène a une solubilité dans le toluène de moins de 10 % en poids à 25 °C.

8. Article adhésif comprenant un substrat et un adhésif sensible à la pression thermofusible selon la revendication 1.

9. Article adhésif de la revendication 8, dans lequel la composition d'adhésif sensible à la pression thermofusible comprend de 1 à 60 % en poids d'une résine hydrocarbonée collante, rapporté au poids de l'adhésif sensible à la pression thermofusible.
